# EUROPÄISCHE PATENTSCHRIFT

(11) **EP 1 502 529 B1**
(45) Veröffentlichungstag und Bekanntmachung des Hinweises auf die Patenterteilung: **21.05.2008**
(21) Anmeldenummer: 04017357.7
(22) Anmeldetag: 22.07.2004
(51) Int. Cl.: A47J 31/40

(54) **Brühvorrichtung mit elastischem Element zum Niederhalten des Kaffeepads**
Brewing device with elastic element for holding the coffee cartridge down
Dispositif d'infusion avec un élément élastique pour maintenir une cartouche pour café

(30) Priorität: 29.07.2003 DE 10334542
(43) Veröffentlichungstag der Anmeldung: 02.02.2005
(73) Patentinhaber: PAV PATENTVERWERTUNG KG, 83395 Freilassing (DE)
(72) Erfinder:
(74) Vertreter: Grünecker, Kinkeldey, Stockmair & Schwanhäusser Anwaltssozietät

(56) Entgegenhaltungen:
- GB-A- 939 813
- US-A- 5 755 149
- US-B1- 6 595 108

## Beschreibung

Die vorliegende Erfindung betrifft eine Brühvorrichtung zur Zubereitung von Kaffee, insbesondere für eine Niederdruckkaffeemaschine, mit einer Brühkammer, die einen oberen Teil und einen unteren Teil aufweist, wobei der untere Teil eine Vertiefung zur Aufnahme von mindestens einem mit gemahlenem Kaffee gefüllten Filterkissen (Kaffeepad) aufweist, der obere Teil und der untere Teil relativ zueinander bewegbar ausgeführt und von einer Öffnungsstellung, in der das Kaffeepad eingesetz- oder entnehmbar ist, in eine Brühstellung überführbar sind.

Kaffeemaschinen, die mit gemahlenem Kaffee gefüllte Filterkissen in einer geeigneten Aufnahmevorrichtung aufnehmen und bei denen in einem zweiten Schritt die mit dem Kaffeepad gefüllte Aufnahmevorrichtung geschlossen wird, um Kaffee zu brühen, sind in vielfältigen Ausführungsformen bekannt, wie z.B aus dem Patent US 6,595,108.

Die US 3,630,155 zeigt eine solche Kaffeemaschine, bei der ein Filterkissen in eine Brüheinheit eingelegt wird, die in eine entsprechende Vorrichtung an der Kaffeemaschine eingehakt und mit einem Handgriff arretiert wird. Der Handgriff bewegt gleichzeitig eine Abdeckplatte in axialer Richtung auf die Brüheinheit, in der das Filterkissen durch die Abdeckplatte positioniert wird. Die Abdeckplatte liegt in der Brühstellung am Filterkissen an, bildet den oberen Abschluss der Brüheinheit und dient gleichzeitig zur Einleitung des heißen Wassers in das Filterkissen. Dabei schließt die Abdeckplatte die Brühkammer nicht vollständig ab, so dass in der Brühkammer ständig Atmosphärendruck herrscht. Das Brühwasser wird durch einen zentralen Einlaufkanal, der in der axialen Betätigungsvorrichtung angeordnet ist, auf die Mitte des Filterkissens geleitet.

Eine weitere Kaffeemaschine zur Zubereitung von Kaffee, Tee oder anderen Heißgetränken ist in der GB 939,813 beschrieben. Auch diese Vorrichtung weist einen Halter zur Aufnahme eines Filterbeutels auf, der unbewegbar mit der Vorrichtung verbunden ist. Zum Bilden einer Brühkammer kann dieser Halter mit einer Abdeckung verschlossen werden. Diese Abdeckung ist über einen Hebelarm an einem Drehpunkt mit der Vorrichtung verbunden, wobei die Abdeckung zum Schließen der Brühkammer um diesen Drehpunkt geschwenkt wird. Nach dem Schließen der Brühkammer kann ein in der Abdeckung angeordnetes Ventil geöffnet werden, um das Brühwasser der Brühkammer zuzuführen. Dabei umströmt das Wasser den Ventilkegel und wird vom Ventilkegel mittig auf den Filterbeutel geleitet.

Viele der bisher bekannten, insbesondere für Niederdruckkaffeemaschinen verwendeten Brühvorrichtungen zur Zubereitung von Kaffee weisen aufwändige Konstruktionen für die Überführung der Filterkissen-Aufnahme in eine Brühkammer auf. Bei den im Stand der Technik bekannten Brühvorrichtungen wird zumeist das Brühwasser zentral auf das Kaffeepad geleitet. Auch einer benutzertreundlichen Ausgestaltung des Belade- und Entnahmevorgangs der Brühvorrichtung mit Filterkissen wird bei üblichen Konstruktionen nur eine geringe Bedeutung zugemessen.

Der vorliegenden Erfindung liegt daher die Aufgabe zugrunde, eine Brühvorrichtung zur Zubereitung von Kaffee der eingangs genannten Art bereitzustellen, die eine bessere Verteilung des Brühwassers auf dem Filterkissen und eine benutzerfreundliche Ausgestaltung des Einsetzens und Entnehmens des Filterkissens ermöglicht.

Diese Aufgabe wird erfindungsgemäß dadurch gelöst, dass vom oberen Teil der Brühkammer ein elastisches, zentral symmetrisch wirkendes Element in die Brühkammer vorsteht.

Das vom oberen Teil in die Brühkammer vorstehende elastische Element platziert beim Schließen der Brühkammer das Kaffeepad in der Vertiefung des unteren Teils und sorgt für eine gute Aufnahme des mit gemahlenem Kaffee gefüllten Filterkissens in der Vertiefung ohne das Kaffeepad in der Vertiefung zu verschieben. Die Positionierung des Kaffeepads durch das elastische Element befreit den Benutzer von einem exakten Einpassen des Kaffeepads in die Vertiefung und gewährleistet unabhängig vom Nutzer ein gleichmäßiges Brühergebnis. Bevorzugt ist das elastische, zentral symmetrisch wirkende Element an einem oberen Brühkammerteil angeordnet, das sich zum Bilden der Brühkammer, entlang einer vertikalen Achse in axialer Richtung bewegt. Die axiale Führung des oberen Teils der Brühkammer vermeidet eine Schwenkbewegung des bewegten Teils der Brühkammer und vermeidet dadurch seitlich wirkende Kräfte, die bei der Positionierung des Kaffeepads gegebenenfalls durch eine unsymmetrisch wirkende Vorrichtung kompensiert werden müssten. Zu Beginn des Brühvorgangs liegt das elastische Element mit leichtem Druck an dem in der Vertiefung aufgenommenem Kaffeepad an, wodurch sich durch die zentral symmetrische Wirkung das Element ein gleichmäßiger, um die vertikale Achse der Brühkammer verteilter Kraftauftrag ergibt. So bildet sich zwischen dem Kaffeepad und dem oberen Teil der Brühkammer ein Hohlraum aus. Dieser Hohlraum zwischen dem Kaffeepad und dem oberen Teil der Brühkammer, durch den das Brühwasser der Brühkammer zugeführt wird, ermöglicht eine bessere Verteilung des Brühwassers auf dem Filterkissen, die zu einem besseren Brühergebnis führt.

Eine günstige Ausführungsform sieht vor, dass das elastische Element eine zum Lösen des nach dem Ende des Brühvorgangs feuchten Kaffeepads vom oberen Teil notwendige Federkraft aufweist. Während des Brühvorgangs nehmen das Filterkissen und der gemahlene Kaffee das Brühwasser auf und das feuchte Filterkissen haftet sich an den Wänden der Brühkammer an. Das elastische Element überwindet dabei ein Anhaften des Kaffeepads am oberen Teil der Brühkammer. Dadurch bleibt das Kaffeepad durch die Niederhalterfunktion auch beim Öffnen der Brühkammer in der Vertiefung im unteren Teil liegen, aus dem es vom Benutzer in einfacher Weise entnommen werden kann.

Bevorzugt kann die Federkraft des elastischen Elements geringer sein als der Anpressdruck des oberen Teils auf das untere Teil in der Brühstellung. Durch diese Ausgestaltung kann das elastische Element die Brühkammer nicht, auch nicht unbeabsichtigt, während eines Brühvorgangs öffnen. Somit entsteht durch das elastische Element kein zusätzliches Gefährdungspotential für den Nutzer. Auch wird das Filterkissenmaterial durch das elastische Element nur gering beansprucht.

Um im Betrieb der Brühvorrichtung eine plastische Verformung des elastischen Elements zu verhindern, kann der elastische Federweg derart bemessen sein, dass der obere Teil als Einfederanschlag für das elastische Element dient.

Eine weitere Ausbildung sieht vor, dass eine Zuführung für das Brühwasser in die Brühkammer vorhanden ist und das elastische Element als Sprinklerelement ausgebildet und in der Zuführung des Brühwassers angeordnet ist. Zu Beginn des Brühvorgangs ist zwischen Kaffeepad und oberen Teil ein Hohlraum vorhanden, da das elastische Element auf das Kaffeepad drückt und noch nicht am Einfederanschlag anliegt. Dabei kann die Zuführung des Brühwassers in die Brühkammer so ausgebildet sein, dass das Brühwasser in diesen Hohlraum geleitet wird. Die Ausbildung des elastischen Elements als Sprinklerelement und dessen Anordnung in der Zuführung des Brühwassers ermöglicht eine Verteilung des zugeführten Brühwassers in den Hohlraum, wobei das Wasser durch das Sprinklerelement im Wesentlichen verteilt oder aufgefächert und nicht wie bei Brandschutzvorrichtungen aktiv versprüht wird. Je nach Art und Eigenschaften des Filterkissens und des gemahlenen Kaffees verkleinert sich während des Brühvorgangs der Hohlraum, wobei das elastische Element bis an den oberen Einfederanschlag gedrückt werden kann.

Eine vorteilhafte Ausgestaltung sieht vor, dass zwischen 50 % und 100 %, bevorzugt über 90 %, des Brühwassers auf das als Sprinklerelement ausgebildete elastische Element trifft. Dadurch trifft ein großer Teil des Brühwassers nicht direkt auf das Kaffeepad, sondern zunächst auf das Sprinklerelement. Dadurch wird eine zusätzliche Verteilerwirkung für das eingeleitete Brühwasser auf der Oberfläche des Kaffeepads erzielt. Dies ist besonders bei Niederdruckkaffeemaschinen wichtig, bei denen das Brühwasser mit 1,0 bar bis 2,0 bar, bevorzugt 1,5 bis 1,8 bar, in die Brühkammer eingespritzt wird.

Günstigerweise kann das als Sprinklerelement ausgebildete elastische Element zumindest am Anfang des Brühvorgangs das Brühwasser großflächig auf das Kaffeepad verteilen. Die großflächige Verteilung des Brühwassers ermöglicht die Benetzung des Kaffeepads auch an von der Zuführung des Brühwassers entfernten Stellen.

Für eine einfache konstruktive Lösung kann das elastische Element mindestens zwei symmetrisch angeordnete Federarme, bevorzugt mehrere Federarme mit zentral symmetrischer Kraftwirkung, aufweisen. Bei einer Ausgestaltung des elastischen Elements mit mehreren Federarmen sind die Federarme bevorzugt im gleichen Abstand zueinander angeordnet.

Eine zweckmäßige Ausführung sieht vor, dass die Oberseite der Federarme zumindestens bereichsweise als Sprinklerelement für das Brühwasser ausgestaltet ist. Hierdurch wird das in die Brühkammer eintretende Brühwasser gleichmäßig um den Federarm herum verteilt.

Vorteilhafterweise können die Federarme sich von einer vertikalen Achse der Brühkammer radial nach außen erstrecken. Die radiale Erstreckung des Federarms in die Brühkammer ermöglicht einen großen Hohlraum zwischen Kaffeepad und oberen Teil, wodurch das Brühwasser großflächig auf das Kafffepad versprüht werden kann. Je nach Ausgestaltung de Federarms ist eine großflächige Benetzung des Filterkissens in der Brühkammer möglich. Weiter drücken die mindestens zwei sich radial nach außen erstreckenden Federarme das Kaffeepad mit symmetrischer Kraftwirkung gut in die Vertiefung des unteren Teils hinein, wobei sich durch die symmetrische Anordnung bzw. die symmetrische Kraftwirkung bei ungerader Zahl der Federarme die Querkräfte kompensieren und das Pad nicht verschieben können.

Eine Variante sieht vor, dass die Federarme S-förmig gebogen sind und sich mit ihrem ersten S-Rücken am oberen Teil der Brühkammer abstützen und mit ihrem zweiten S-Rücken in der geschlossenen Brühstellung auf das Kaffeepad drücken. Durch die S-förmige Konstruktion können die Federarme sich am oberen Teil der Brühkammer abstützen und gleichzeitig das Kaffeepad in den unteren Teil hineindrücken, ohne dass am oberen Teil der Brühkammer eine Vorrichtung zum Abstützen der Federarme vorgesehen werden muss.

Um bei einem S-förmig gebogenen Federarm ein abgestimmtes Verteilen des Brühwassers und eine möglichst gute Benetzung des Kaffeepads zu erreichen, kann der zweite S-Rücken einen größeren Krümmungsradius aufweisen als der erste S-Rücken. Durch diese Ausgestaltung wird das auf den Federarm treffende Brühwasser nicht nur radial nach außen, sondern auch zu den Seiten des Federarms verteilt.

Zur Verhinderung einer Verletzung des Kaffeepads durch den Federarm können die Federarme zumindest auf der zum Kaffeepad gerichteten Seite abgerundete Kanten aufweisen.

Bevorzugt können die Federarme aus Edelstahl hergestellt sein. Federarme aus Edelstahl weisen eine gute Korrosionsbeständigkeit gegenüber dem heißen Brühwasser sowie gute Federeigenschaften auf.

Eine weitere Ausgestaltung sieht vor, dass die Breite der Federarme zwischen 4 % und 16 %, bevorzugt zwischen 6 % und 10 %, des Durchmessers der Brühkammer beträgt. Dies ermöglicht eine gute Abstimmung der Aufgaben der Federarme, das Herunterdrücken des Kaffeepads und das Auffächern des Brühwassers, bei einer möglichst gleichmäßigen Verteilung des Brühwassers auf dem Kaffeepad und das Niederhalten des Kaffeepads in der Wechselkassette beim Öffnen der Brühkammer.

Eine bevorzugte Ausbildung der Erfindung sieht vor, dass die Federarme sich von einem Federklemmring radial nach außen erstrecken, und der Federklemmring koaxial zur vertikalen Achse am oberen Teil der Brühkammer angeordnet ist. Der Federklemmring ermöglicht eine einfache Befestigung der Federarme unabhängig von ihrer Anzahl. Ausgehend von diesem Federklemmring können die Federarme sich gleichmäßig zu allen Seiten über das gesamte Kaffeepad erstrecken. Dabei können sich die Federarme, ausgehend von einer Anordnung des Federklemmrings in der vertikalen Achse, über 40 % bis 80 %, bevorzugt zwischen 50 % und 60 %, des Radius der Brennkammer, ausgehend von der vertikalen Achse, in die Brennkammer hinein erstrecken.

Für eine einfache Anordnung des Federklemmrings in der Brühkammer kann der Federklemmring auf einen vom oberen Teil in die Brühkammer vorstehenden Zapfen befestigt sein.

Um eine Drehsicherung des Federklemmrings gegenüber dem oberen Teil der Brühkammer zu verwirklichen, kann der Federklemmring eine innenliegende Rastöffnung und mindestens eine Rastzunge aufweisen, die sich in die Rastöffnung erstreckt. Bei einer Befestigung des Federklemmrings auf dem vorstehenden Zapfen kann der Zapfen entsprechende Rastöffnungen oder Rastnuten aufweisen, in die die Rastzunge eingreift, um ein radiales Verdrehen des Federelements um die vertikale Achse zu verhindern.

Des Weiteren bezieht sich die vorliegende Erfindung auf eine Brühvorrichtung zur Zubereitung von Kaffee, insbesondere für eine Niederdruckkaffeemaschine, mit einer Brühkammer, die einen oberen Teil und einen unteren Teil aufweist, und mindestens einem, in einer Vertiefung des unteren Teils angeordneten und mit gemahlenem Kaffee gefüllten Filterkissen (Kaffeepad), wobei der obere Teil und der untere teil relativ zueinander bewegbar ausgeführt und von einer Öffnungsstellung, in der das Kaffeepad einsetz- oder entnehmbar ist, in eine Brühstellung überführbar sind, wobei vom oberen Teil der Brühkammer ein elastisches, zentral symmetrisches Element in die Brühkammer vorsteht. Das elastische Element, das mit leichtem Druck an dem Kaffeepad anliegt, erzeugt zu Beginn des Brühvorgangs zwischen dem Kaffeepad und dem oberen Teil der Brühkammer einen Hohlraum, in den das Brühwasser während des Brühvorgangs eingespritzt werden kann. Während des gesamten Brühvorgangs und auch nach Abschluss drückt das elastische Element das Kaffeepad gleichmäßig in die Vertiefung des unteren Teils. Dadurch wird beim Öffnen der Brühkammer die am oberen Teil anhaftenden Bereiche des feuchten Filterkissens vom oberen Teil gelöst und das Kaffeepad zur Entnahme in der Vertiefung im unteren Teil gehalten.

Des Weiteren besteht durchaus die Möglichkeit, das elastische Element so anzuordnen, dass ein Einströmen des Brühwassers in die Brühkammer durch dieses nicht behindert wird (keine Sprinklerfunktion). Je nach Füllung und Ausgestaltung des verwendeten Kaffeepads kann sich hierdurch eine bessere Benetzung und Durchströmung mit dem Brühwasser einstellen. Insbesondere bei der Ausführungsform mit mehreren Federarmen wird das Pad sich zwischen den Federarmen aufwölben und hierdurch näher an die in diesem Bereich liegenden Eintrittsöffnungen angelegt. Ein sogenannter Bypass-Effekt kann insbesondere durch eine solche Maßnahme ausgeschlossen werden, das das Brühwasser gezwungen ist, durch das Kaffeepad zu fließen.

Im Folgenden wird anhand der Zeichnungen eine Ausführungsform der erfindungsgemäßen Brühvorrichtung näher erläutert. Es zeigen:
- Fig. 1: eine seitliche Schnittansicht der Brühvorrichtung in einer Brühstellung,
- Fig. 2: eine perspektivische Seitenansicht des oberen Teils der Brühkammer, und
- Fig. 3: eine perspektivische Draufsicht auf das elastische Federelement.

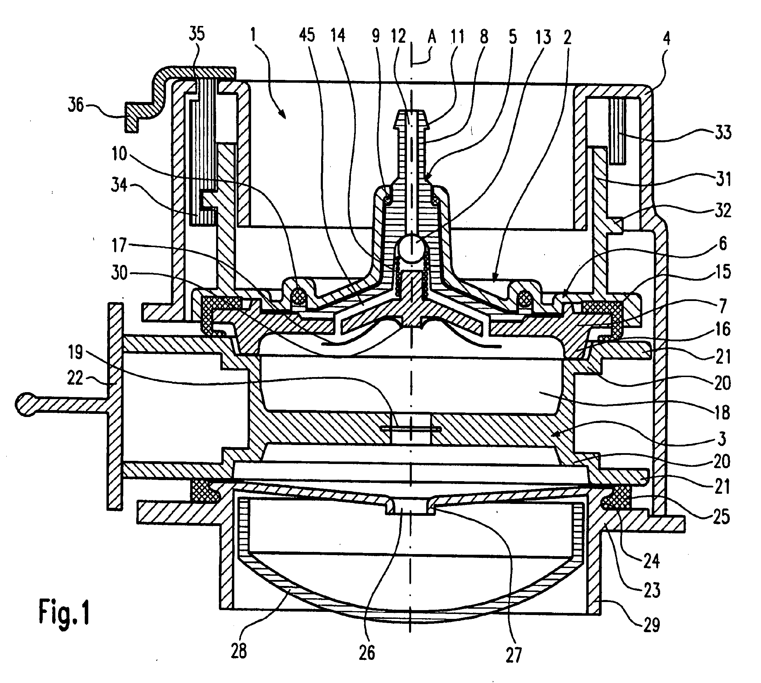

Die in Fig. 1 dargestellte Brühvorrichtung ist Bestandteil einer Niederdruckkaffeemaschine, die in hier nicht näher beschriebener Weise bekannte Baueinheiten, wie Wasservorratsbehälter, Boilervorrichtung, Wasserpumpe und die für den Brüh- und Pumpvorgang erforderliche Elektrik umfasst. Hierzu gibt es im Stand der Technik ausreichend Beispiele, weshalb hier auf diesen verwiesen wird.

Fig. 1 zeigt den Schnitt durch eine erfindungsgemäße Brühvorrichtung 1 mit einem oberen Brühkammerteil 2 und einer Wechselkassette 3, die in einem Gehäuse 4 angeordnet sind. Der obere Brühkammerteil 2 besteht aus einem innenliegenden Ventilteil 5, einem Abdeckteil 6 und einer Druckplatte 7. Dabei ist das Abdeckteil 6 derart ausgeformt, dass es das innenliegende Ventilteil 5 in sich aufnimmt, wobei ausschließlich der Wasseranschluss 8 des Ventilteils 5 aus dem Abdeckteil 6 herausragt.

Zwischen dem Abdeckteil 6 und dem Ventilteil 5 sind zwei Dichtungsringe 9 und 10 angeordnet, wobei der Dichtungsring 9 am Austritt des Wasseranschlusses 8 aus dem Abdeckteil 6 platziert ist und der Dichtungsring 10, am Außenumfang des sich vom Wasseranschluss 8 seitlich erstreckenden Ventilteils 5, das Ventilteil 5 zum Abdeckteil 6 abdichtet. Am Wasseranschluss 8 ist an dem offenliegenden Ende eine umlaufende Nase 11 vorhanden, die den Anschluss und die Befestigung einer Brühwasserleitung erleichtert. Am unteren Ende des durch den Wasseranschluss 8 führenden Einlaufkanals 12 für das Brühwasser ist eine Ventilkugel 13 angeordnet, die sich mit einer Feder 14 gegen die Druckplatte 7 abstützt. Das Ventilteil 5 liegt mit seiner Unterseite an der Druckplatte 7 an, wobei die Feder 14 durch einen Vorsprung der Druckplatte 7 geführt wird. Zwischen dem Ventilteil 5 und der Druckplatte 7 erstrecken sich, ausgehend von der Ventilkugel 13 Zuführkanäle 45 für das Brühwasser, die sich zunächst seitlich erstrecken und an ihrem Ende durch die Druckplatte 7 hindurch geführt sind. Das Abdeckteil 6 erstreckt sich vom seitlichen Dichtungsring 10 des Ventilteils 5 weiter nach außen und umfasst mit seiner Außenkante seitlich die Lippendichtung 15, die zwischen dem Abdeckteil 6 und der Druckplatte 7 platziert ist und in axialer Richtung nach unten teilweise über die Druckplatte 7 übersteht. Die Druckplatte 7 weist einen ringförmig umlaufenden, in axialer Richtung nach unten vorstehenden Steg 16 auf, der als einzigster Teil der Druckplatte 7 nach unten über die Lippendichtung 15 übersteht. In der Mitte der Druckplatte 7 ist um einen Zapfen 30 ein sich seitlich erstreckendes nach unten gerichtete Federelement 17 angeordnet.

Die Druckplatte 7 des oberen Brühkammerteils 2 bildet zusammen mit der Wechselkassette 3 eine Brühkammer 18. Zum Ausbilden der Brühkammer 18 weist die Wechselkassette 3 eine Vertiefung auf, in deren Mitte sich der Brühkammerauslass 19 befindet. Im Seitenbereich weist die Vertiefung einen ersten Absatz 20 auf, auf dem der Steg 16 der Druckplatte 7 aufliegt. An diesen Absatz 20 schließt sich in Form eines weiteren Absatzes ein Vorsprung 21 an, der mit der gegenüber dem Steg 16 zurückversetzten Lippendichtung 15 zusammenwirkt, um die Brühkammer 18 abzudichten. Der umlaufende Vorsprung 21 bildet gleichzeitig die Oberkante der Wechselkassette 3. Die Wechselkassette 3 weist an einer Seite einen Griff 22 auf, mit dem die Wechselkassette 3 in der Öffnungsstellung aus der Brühvorrichtung 1 herausgezogen werden kann. Dazu weist das Gehäuse 4 an der Seite des Griffes 22 eine entsprechende Öffnung auf. Die Wechselkassette 3 kann auch in einem gewendeten Zustand, d.h. die Ober- und Unterseite der Wechselkassette 3 sind vertauscht, in der Brühvorrichtung 1 eingesetzt werden. Dabei weist die in Fig. 1 als Unterseite der Wechselkassette 3 dargestellte Seite eine kleinere Vertiefung als die Oberseite auf, wodurch sich mit dieser Unterseite eine Brühkammer 18 mit einem verringerten Volumen bilden lässt. Um die Wechselfähigkeit zu ermöglichen, sind auch auf der Unterseite der Wechselkassette 3 im seitlichen Bereich der Vertiefung der Absatz 20 und der Vorsprung 21 ausgebildet.

Die Wechselkassette 3 stützt sich auf ihrer Unterseite mit dem äußeren Absatz 21 auf der Abstützplatte 23 ab, die seitlich über das Gehäuse 4 übersteht und mit diesem verbunden ist. die Abstützplatte 23 weist eine radial umlaufende Nut 24, in der ein Dichtungsring 25 angeordnet ist, der im geöffneten Zustand der Brühvorrichtung 1 über die Abstützplatte 23 vorsteht. Die Abstützplatte 23 weist mittig einen Ablauf 26 mit einem nach unten gezogen Spritzschutz 27 auf. Die Abstützplatte 23 weist zwischen dem Auflagebereich der Wechselkassette 3 und dem Ablauf 26 ein Gefälle auf, das den sicheren Ablauf des aus der Brühkammer 18 kommenden Kaffees in den Auslauf 28 ermöglicht.

Der in seinem Mittelbereich rund zulaufende Auslauf 28 ist in einer Vertiefung der Abstützplatte 23 angeordnet, die durch den sich in axialer Richtung erstreckenden Ringabschnitt 29 der Abstützplatte 23 gebildet wird. Der Auslauf 28 leitet den Kaffee zu mindestens einer, üblicherweise zwei, hier nicht gezeigten Auslauftüllen.

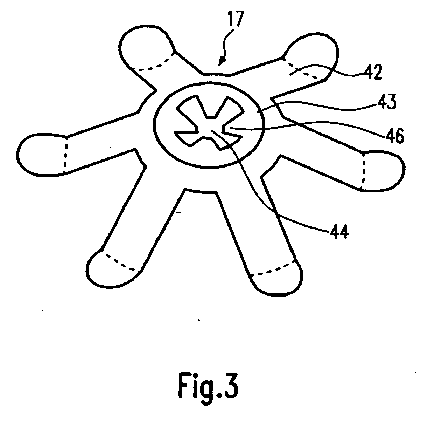

Das Federelement 17 ist an einem an der Druckplatte 7 vorspringenden Zapfen 30 befestigt und ragt mit seinen Federarmen 42 in die Brühkammer 18 hinein. Dabei bleiben die Federarme 42 hinter der Teilungsebene der Brühkammer 18 zwischen oberen Teil 2 und Wechselkassette 3 zurück, d.h. die Federarme 42 stehen nicht über den sich von der Druckplatte 7 nach unten erstreckenden Steg 16 über. Wie in Fig. 3 dargestellt, besteht das Federelement 17 aus einem Federklemmring 43, an dem mehrere Federarme 42 angeordnet sind, die sich vom Federklemmring 43 radial nach außen erstrecken. Bei der unsymmetrischen Anordnung einer ungeraden Anzahl, d.h. mindestens drei Federarmen 42, ist besonders auf die gleichmäßige Verteilung am Umfang des Federklemmringes 43 zu achten, um die zentral symmetrische Kraftwirkung des Federelements 17 zu gewährleisten. Der Federklemmring 43 weist mittig eine Rastöffnung 44 auf, durch die das Federelement 17 auf dem in der Mitte der Druckplatte 7 sich nach unten erstreckenden Zapfen 30 befestigt, bevorzugt aufgeklemmt werden kann. In die Rastöffnung 44 erstrecken sich vier vom Federklemmring 43 ausgehende Rastzungen 46 hinein. Die Rastzungen 46 sind gleichmäßig auf dem Umfang der Rastöffnung 44 verteilt und kegelstumpfförmig ausgebildet. Die Rastzungen 46 greifen in entsprechende Rastöffnungen oder Rastnuten am Zapfen 30 ein. Diese Rastöffnungen sind in der in Fig. 1 dargestellten Schnittzeichnung nicht erkennbar. Alternativ können die Rastzungen 46 mit Bolzen oder Stegen zusammenwirken, die sich von der Druckplatte 7 nach unten erstrecken und in den Randbereich der Rastöffnung 44 eingreifen. Die S-förmige Ausgestaltung der einzelnen Federarme 42 ist in Fig. 1 dargestellt, wobei die einzelnen Federarme 42 mit dem jeweils ersten, noch im Federklemmring 43 ausgebildeten S-Rücken, an der Druckplatte 7 abstützen und mit dem zweiten S-Rücken in die Brühkammer 18 hineinragen.

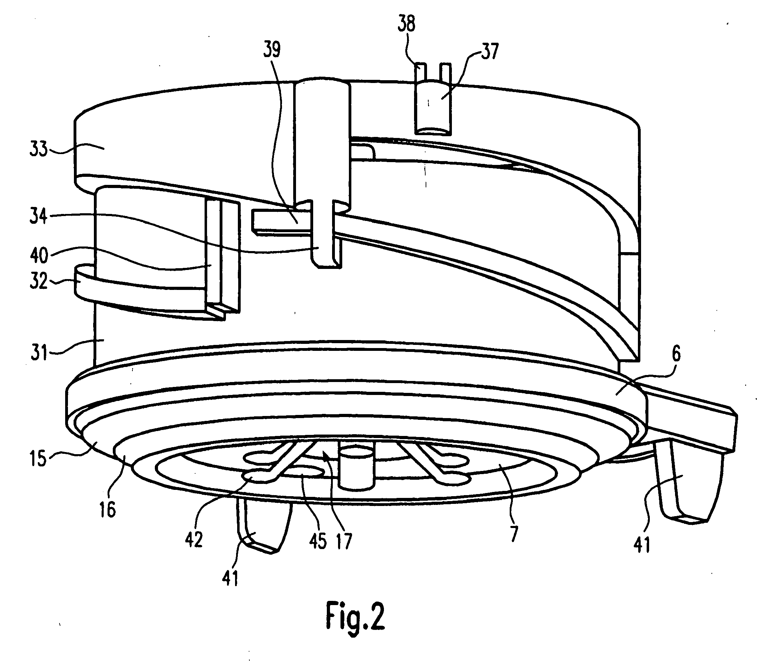

Um das obere Brühkammerteil 2 in axialer Richtung zu bewegen, ist das Abdeckteil 6 mit einem sich in axialer Richtung erstreckenden ringförmig ausgebildeten Aufdrückteil 31 verbunden. Am Außenumfang des Aufdrückteils 31 ist ein Führungssteg 32 ausgebildet, der sich wendelförmig um den Außenumfang des Aufdrückteils 31 erstreckt. Um den Außenumfang des Aufdrückteils 31 ist weiter das Betätigungsteil 33 platziert, das sich oberhalb des Führungsstegs 32 bis zu Oberkante des Gehäuses erstreckt. Das ebenfalls ringförmig ausgebildete Betätigungsteil 33 ist, wie in Fig. 2 deutlich erkennbar, rampenförmig ausgebildet und ist drehbar um das Aufdrückteil 31 angeordnet. Durch einen Öffnungsschlitz 35 an der Stirnseite des Gehäuses 4 ist das Betätigungsteil 33 mit einem Handgriff 36 verbunden. Dabei wird der Handgriff 36 an dem Gewindestutzen 37 verschraubt, der koaxial an der Oberkante des Betätigungsteils 33 angeordnet ist und mit einem Führungsabschnitt 38 in den Öffnungsschlitz hineinragt. Das Betätigungsteil 33 weist weiter einen Haken 34 auf, der den Führungssteg 32 umgreift. Der Führungssteg 32 weist einen waagerechten Stegteil 39 auf, der in der in Fig. 2 gezeigten Brühstellung mit dem Haken 34 des Betätigungsteils 33 in Verbindung steht, um die beim Brühen entstehenden Druckkräfte in vertikaler Richtung weiterzuleiten. Des Weiteren weist der Führungssteg 32 einen horizontalen Stegteil 40 auf, der im unteren Ende des wendelförmigen Führungsstegs 32 angeordnet ist und als Anschlag der Hubeinrichtung für die Öffnungsstellung der Brühvorrichtung 1 dient. Am Abdeckteil 6 sind zwei Arretierzapfen 41 angeordnet, die in axialer Richtung nach unten über den Steg 16 der Druckplatte 7 vorstehen und in entsprechende Öffnungen der Wechselkassette 3 eingreifen, um diese zu positionieren und ein Herausziehen in der Brühstellung zu verhindern.

In der Benutzung der erfindungsgemäßen Brühvorrichtung 1 kann in der Öffnungsstellung, in der das obere Brühkammerteil 2 durch das Betätigungsteil 33 und das Aufdrückteil 31 in eine obere Endstellung gefahren ist, wobei die obere Endstellung durch den Anschlag des vertikalen Stegteils 40 an den vertikalen Rampenbereich des Betätigungsteils definiert ist, die nur auf dem unteren Dichtring 25 aufliegende Wechselkassette 3 aus der Brühvorrichtung 1 entnommen werden, um die ausgewählte Vertiefung der Wechselkassette 3 mit einem bzw. gegebenenfalls zwei Filterkissen zu beladen. In der in Fig. 1 gezeigten Stellung wird die obere Vertiefung üblicherweise mit zwei Kaffeepads bzw. einem mit einer doppelten Menge an gemahlenem Kaffee gefüllten Kaffeepad, versehen. Die beladene Wechselkassette 3 wird wieder in die Brühvorrichtung 1 eingeschoben.

Nach Beendigung des Beladevorgangs wird die Brühvorrichtung 1 mit dem Handgriff 36 in die Brühstellung überführt. Dabei wird der Handgriff 36 um die vertikale Achse A geschwenkt und das mit ihm verbundene Betätigungsteil 33 um diese vertikale Achse A gedreht. Das Betätigungsteil 33 drückt mit seinen rampenförmig ausgebildeten Abschnitten auf den wendelförmigen Führungssteg 32, wobei sich der Kontakt zwischen dem Betätigungsteil 33 und dem Führungssteg 32 mit zunehmender Bewegung in Richtung der Brühstellung verringert. Durch den Druck auf den Führungssteg 32 wird das obere Brühkammerteil 2 in axialer Richtung auf die Wechselkassette 3 gedrückt. Bei dieser Schließbewegung berührt zunächst die Lippendichtung 15 den oberen Vorsprung 21. Als nächstes berührt der ringförmig umlaufende von der Druckplatte 7 axial vorstehende Steg 16 den oberen Absatz 20 der Wechselkassette 3, wobei sich die Lippendichtung 15 weiter an den oberen Vorsprung 21 andrückt. Bei einer Zunahme des axialen Drucks über den Steg 16 auf die Wechselkassette 3 wird der untere Vorsprung 21 auf die Abstützplatte 23 gedrückt, wobei der Dichtungsring 25 zusammengedrückt wird und damit seine Dichtwirkung zum unteren Vorsprung 21 erhöht. Durch den Eingriff des ringförmigen axial vorstehenden Stegs 16 in den oberen Absatz 20 wird während des Schließvorgangs die Lage der Wechselkassette 3 zum oberen Brühkammerteil 2 ausgerichtet. Während des Schließens der Brühkammer 18 drückt das in der Mitte der Druckplatte 7 angeordnete Federelement 17 mit seinen Federarmen 42 das Kaffeepad gleichmäßig in die Vertiefung der Wechselkassette 3. Dadurch entsteht zwischen dem Kaffeepad und der Druckplatte 7 ein sich über einen großen Bereich der Druckplatte 7 radial erstreckender Hohlraum. In der Brühstellung ist die aus der Druckplatte 7 und der Vertiefung der Wechselkassette 3 gebildete Brühkammer 18 durch den auf den Absatz 20 drückenden Steg 16 und die auf den Vorsprung 21 drückende Lippendichtung 15 dicht gegenüber der Umgebung abgeschlossen.

Im Folgenden wird nunmehr die Wirkungs- und Funktionsweise der oben beschriebenen Brühvorrichtung 1 näher erläutert.

In der in Fig. 1 dargestellten geschlossenen Brühstellung sind üblicherweise in der Brühkammer 18 zwei aufeinander liegende Filterpads angeordnet. Ein umlaufender Verriegelungsrand des oberen Filterpads liegt dabei auf der Oberseite des oberen Absatzes 20 auf und befindet sich demnach in der Brühstellung zwischen dem Absatz 20 und dem Steg 16. In dieser geschlossenen Brühstellung wird von einer Pumpe heißes Wasser über die Anschlussleitung dem Ventilteil 5 zugeführt. Durch den Druck des Brühwassers wird die Feder 14 durch die Ventilkugel 13 zusammengedrückt, wobei die Ventilkugel 13 sich von ihrem Ventilsitz löst und einen Wasserzulauf über die Zuführkanäle 45 zur Brühkammer 18 ermöglicht. Je nach Ausgestaltung des Brühkammerauslasses 19 kann die Pumpe in der gegenüber der Umgebung geschlossenen Brühkammer 18 bei einer in einer Niederdruckkaffeemaschine eingesetzten Brühvorrichtung 1 einen Druck zwischen 1,0 bar und 2,0 bar aufbauen. Das Brühwasser wird vom Ventilteil 5 durch mehrere Zuführkanäle 45 in den Hohlraum zwischen Federelement 17 und Druckplatte 7 eingespritzt. Dabei trifft das meiste Wasser zunächst auf die Federarme 42 und wird von dort großflächig durch den Hohlraum auf dem Kaffeepad verteilt. Die Federarme 42 werden in ihrer Position relativ zu den Zuführkanälen 45 durch die Rastzungen 46 gehalten, die in Zusammenwirkung mit entsprechenden Rastvertiefungen im Zapfen 30 oder von der Druckplatte 7 in die Brühkammer 18 hineinragenden Bolzen eine radiale Drehbewegung um den sich vertikal in die Brühkammer 18 hineinerstreckenden Zapfen 30 verhindern. Das Kaffeepad wird zunächst durch das Wasser befeuchtet und im weiteren Verlauf von dem Brühwasser durchströmt, das am Brühkammerauslass 19 aus der Brühkammer 18 austritt und über den Ablauf 26 und dem Auslauf 28 aus der oder den Auslauftüllen aus der Brühvorrichtung 1 austritt. Die Abstützplatte 23 ist in dem Bereich unter der Brühkammer 18 zum Ablauf 26 hin geneigt, um einen sicheren und vollständigen Ablauf des Kaffees zu gewährleisten. Nach einem bestimmten, einstellbaren Zeitraum bzw. einer geförderten Wassermenge, wird die Pumpe wieder abgeschaltet und damit der Brühvorgang beendet.

Nach dem Ende des Brühvorgangs kann die Brühkammer 18 durch ein Rückschwenken des Handgriffs 36 wieder geöffnet werden. Beim Rückschwenken des Handgriffs 36 wird das obere Brühkammerteil 2 in axialer Richtung nach oben bewegt, weil der Führungssteg 32 von dem Haken 34 umgriffen wird. Der Haken 34 überträgt die durch die Drehbewegung des Betätigungsteils 32 induzierte axiale Bewegung in Richtung der Öffnungsstellung über den Führungssteg 32 auf das Aufdrückteil 31 und damit auf das obere Brühkammerteil 2. Beim Öffnen der Brühkammer 18 drückt das Federelement 17 mit seinen Federarmen 42 auf das feuchte Kaffeepad und löst die nach dem Brühvorgang an der Druckplatte 7 anhaftenden Bereiche des Kaffeepads. So verbleibt das Kaffeepad beim Öffnen der Brühvorrichtung in der Vertiefung der Wechselkassette 3 und wird nicht zusammen mit dem oberen Teil der Brühkammer nach oben bewegt.

In der nicht dargestellten Öffnungsstellung sind die konisch ausgestalteten Arretierzapfen 41 aus den entsprechenden Öffnungen in der Wechselkassette 3 herausbewegt und geben diese frei. Die Druckplatte 7 ist ebenfalls so weit nach oben bewegt, dass sich der Steg 16 oberhalb der Öffnung für die Wechselkassette 3 im Gehäuse 4 befindet. In dieser Öffnungsstellung kann die Wechselkassette 3 zusammen mit dem gebrauchten, durch das Brühwasser befeuchteten Kaffeepad aus der Brühvorrichtung 1 am Griff 22 herausgezogen werden. Da das Federelement 17 beim Öffnen der Brühkammer 18 das Kaffeepad vom oberen Teil 2 gelöst hat, so dass das Kaffeepad sich in der Öffnungsstellung immer in der Vertiefung der Wechselkassette 3 befindet, kann die Wechselkassette 3 in der Öffnungsstellung immer ohne Probleme, d.h. ohne ein Verklemmen oder eine Beschädigung des Kaffeepads, aus der Brühvorrichtung 1 entnommen werden. Nach der Entnahme des verbrauchten Kaffeepads aus der Brühkammervertiefung der Wechselkassette 3 kann die Wechselkassette 3 für einen weiteren Brühvorgang erneut mit einem Kaffeepad versehen werden, oder ungefüllt in die Brühvorrichtung zurückgeschoben werden.

Im ungefüllten Zustand kann in einer geschlossenen Stellung der Brühvorrichtung 1 ein Spül- oder Reinigungsvorgang durchgeführt werden, bei dem heißes Brühwasser aus den Zuführkanälen 45 auf die in ihrer Position durch die Rastzungen 46 fixierten Federarme 42 geleitet wird und sich von dort zur Reinigung in der gesamten Brühkammer 18 verteilt.

## Patentansprüche

1. Brühvorrichtung (1) zur Zubereitung von Kaffee, insbesondere für eine Niederdruckkaffeemaschine, mit einer Brühkammer (18), die einen oberen Teil (2) und einen unteren Teil (3) aufweist, wobei der untere Teil (3) eine Vertiefung zur Aufnahme von mindestens einem mit gemahlenem Kaffee gefüllten Filterkissen (Kaffeepad) aufweist, der obere Teil (2) und der untere Teil (3) relativ zueinander bewegbar ausgeführt und von einer Öffnungsstellung, in der das Kaffeepad einsetz- oder entnehmbar ist, in eine Brühstellung überführbar sind, vom oberen Teil (2) der Brühkammer (18) steht ein elastisches, zentral symmetrisch wirkendes Element (17) in die Brühkammer (18) vor,
**dadurch gekennzeichnet, dass** das elastische Element (17) mindestens zwei symmetrisch angeordnete Federarme (42), bevorzugt mehrere Federarme (42), mit einer zentral symmetrisch wirkender Federkraft aufweist, wobei die Federkraft zum Lösen des nach dem Ende eines Brühvorgangs feuchten Kaffeepads vom oberen Teil (2) ausreicht.

2. Brühvorrichtung (1) nach Anspruch 1,
**dadurch gekennzeichnet, dass** die Federkraft des elastischen Elements (17) geringer ist als der Anpressdruck des oberen Teils (2) auf das untere Teil (3) in der Brühstellung.

3. Brühvorrichtung (1) nach einem der Ansprüche 1 oder 2,
**gekennzeichnet durch** einen derart bemessenen, elastischen Federweg, dass der obere Teil (2) als Einfederanschlag für das elastische Element (17) dient.

4. Brühvorrichtung (1) nach einem der Ansprüche 1 bis 3,
**dadurch gekennzeichnet, dass** eine Zuführung (45) für das Brühwassers in die Brühkammer (18) vorhanden ist und das elastische Element (17) als Sprinklerelement ausgebildet und in der Zuführung (45) des Brühwassers angeordnet ist.

5. Brühvorrichtung (1) nach Anspruch 4,
**dadurch gekennzeichnet, dass** zwischen 50 % und 100 %, bevorzugt über 90 %, des Brühwassers auf das als Sprinklerelement ausgebildete elastische Element (17) trifft.

6. Brühvorrichtung (1) nach einem der Ansprüche 4 oder 5,
**dadurch gekennzeichnet, dass** das als Sprinklerelement ausgebildete elastische Element (17) zumindest am Anfang des Brühvorgangs das Brühwasser großflächig auf das Kaffeepad verteilt.

7. Brühvorrichtung (1) nach einem der Ansprüche 1 bis 6,
**dadurch gekennzeichnet, dass** die Oberseite der Federarme (42) zumindest bereichsweise als Sprinklerelement für das Brühwasser ausgestaltet ist.

8. Brühvorrichtung (1) nach einem der Ansprüche 1 oder 7,
**dadurch gekennzeichnet, dass** die Federarme (42) sich von einer vertikalen Achse (A) der Brühkammer (18) radial nach außen erstrecken.

9. Brühvorrichtung (1) nach einem der Ansprüche 1 bis 8,
**dadurch gekennzeichnet, dass** die Federarme (42) S-förmig gebogen sind und sich mit ihrem ersten S-Rücken am oberen Teil (2) der Brühkammer (18) abstützen und mit ihrem zweiten S-Rücken in der geschlossenen Brühstellung auf das Kaffeepad drücken.

10. Brühvorrichtung (1) nach Anspruch 9,
**dadurch gekennzeichnet, dass** der zweite S-Rücken einen größeren Krümmungsradius aufweist als der erste S-Rücken.

11. Brühvorrichtung (1) nach einem der Ansprüche 1 bis 10,
**dadurch gekennzeichnet, dass** die Federarme (42) zumindest auf der zum Kaffeepad gerichteten Seite abgerundete Kanten aufweisen.

12. Brühvorrichtung (1) nach einem der Ansprüche 1 bis 11,
**dadurch gekennzeichnet, dass** die Federarme (42) aus Edelstahl hergestellt sind.

13. Brühvorrichtung (1) nach einem der Ansprüche 1 bis 12,
**dadurch gekennzeichnet, dass** die Breite der Federarme (42) zwischen 4 % und 16 %, bevorzugt zwischen 6 % und 10 %, des Durchmessers der Brühkammer beträgt.

14. Brühvorrichtung (1) nach einem der Ansprüche 1 bis 13,
**dadurch gekennzeichnet, dass** die Federarme (42), sich von einem Federklemmring (43) radial nach außen erstrecken, und der Federklemmring (43) koaxial zur vertikalen Achse am oberen Teil (2) der Brühkammer (18) angeordnet ist.

15. Brühvorrichtung (1) nach Anspruch 14,
**dadurch gekennzeichnet, dass** der Federklemmring (43) auf einen vom oberen Teil (2) in die Brühkammer (18) vorstehenden Zapfen (30) befestigt ist.

16. Brühvorrichtung (1) nach einem der Ansprüche 14 oder 15,
**dadurch gekennzeichnet, dass** der Federklemmring (43) eine innenliegende Rastöffnung (44) und mindestens eine Rastzunge (46) aufweist die sich in die Rastöffnung (44) erstreckt.

17. Brühvorrichtung (1) zur Zubereitung von Kaffee, insbesondere für eine Niederdruckkaffeemaschine, mit einer Brühkammer (18), die einen oberen Teil (2) und einen unteren Teil (3) aufweist, und mindestens einem, in einer Vertiefung des unteren Teils (3) angeordneten und mit gemahlenem Kaffee gefüllten Filterkissen (Kaffeepad), wobei der obere Teil (2) und der untere Teil (3) relativ zueinander bewegbar ausgeführt und von einer Öffnungsstellung, in der das Kaffeepad einsetz- oder entnehmbar ist, in eine Brühstellung überführbar sind, vom oberen Teil (2) der Brühkammer (18) steht ein elastisches, zentral symmetrisch wirkendes Element (17) in die Brühkammer (18) vor,
**dadurch gekennzeichnet, dass** das elastische Element (17) mindestens zwei symmetrisch angeordnete Federarme (42), bevorzugt mehrere Federarme (42), mit einer zentral symmetrisch wirkender Federkraft aufweist, wobei die Federkraft zum Lösen des nach dem Ende eines Brühvorgangs feuchten Kaffeepads vom oberen Teil (2) ausreicht.

## Claims

1. Brewing device (1) for preparing coffee, in particular for a low-pressure coffee machine, with a brewing chamber (18) comprising a top part (2) and a bottom part (3), which bottom part (3) has a recess for accommodating at least one filter pad (coffee pad) filled with ground coffee, and the top part (2) and the bottom part (3) are designed so that they can be moved relative to one another and can be transferred from an open position in which the coffee pad can be inserted or removed into a brewing position, and a centrally symmetrically acting elastic element (17) projects into the brewing chamber (18) from the top part (2) of the brewing chamber (18),
**characterised in that** the elastic element (17) has at least two symmetrically disposed resilient arms (42), preferably several resilient arms (42), with a centrally symmetrically acting spring force, and the spring force is sufficient to release the wet coffee pad from the top part (2) at the end of a brewing process.

2. Brewing device (1) as claimed in claim 1,
**characterised in that** the spring force of the elastic element (17) is weaker than the force by which the top part (2) is pressed onto the bottom part (3) in the brewing position.

3. Brewing device (1) as claimed in one of claims 1 or 2,
**characterised by** an elastic spring force which is dimensioned so that the top part (2) acts as a stop for the inward springing action of the elastic element (17).

4. Brewing device (1) as claimed in one of claims 1 to 3,
**characterised in that** an inlet (45) into the brewing chamber (18) is provided for the brewing water and the elastic element (17) is provided in the form of a sprinkler element and is disposed in the inlet (45) for the brewing water.

5. Brewing device (1) as claimed in claim 4,
**characterised in that** between 50 % and 100 %, preferably in excess of 90 %, of the brewing water hits the elastic element (17) provided in the form of a sprinkler element.

6. Brewing device (1) as claimed in one of claims 4 or 5,
**characterised in that** the elastic element (17) provided in the form of a sprinkler element distributes the brewing water across a large surface area of the coffee pad at least at the start of the brewing process.

7. Brewing device (1) as claimed in one of claims 1 to 6,
**characterised in that** at least certain regions of the top face of the resilient arms (42) are designed as a sprinkler element for the brewing water.

8. Brewing device (1) as claimed in one of claims 1 or 7,
**characterised in that** the resilient arms (42) extend radially outwards from a vertical axis (A) of the brewing chamber (18).

9. Brewing device (1) as claimed in one of claims 1 to 8,
**characterised in that** the resilient arms (42) are bent in an S-shape and are supported on the top part (2) of the brewing chamber (18) by means of their first S-spine and press on the coffee pad by means of their second S-spine in the closed brewing position.

10. Brewing device (1) as claimed in claim 9,
**characterised in that** the second S-spine has a bigger radius of curvature than the first S-spine.

11. Brewing device (1) as claimed in one of claims 1 to 10,
**characterised in that** the resilient arms (42) have rounded edges, at least on the side directed towards the coffee pad.

12. Brewing device (1) as claimed in one of claims 1 to 11,
**characterised in that** the resilient arms (42) are made from stainless steel.

13. Brewing device (1) as claimed in one of claims 1 to 12,
**characterised in that** the width of the resilient arms (42) is between 4 % and 16 %, preferably between 6 % and 10 % of the diameter of the brewing chamber.

14. Brewing device (1) as claimed in one of claims 1 to 13,
**characterised in that** the resilient arms (42) extend radially outwards from a resilient clamping ring (43) and the resilient clamping ring (43) is disposed on the top part (2) of the brewing chamber (18) coaxially with the vertical axis.

15. Brewing device (1) as claimed in claim 14,
**characterised in that** the resilient clamping ring (43) is attached to a pin (30) projecting into the brewing chamber (18) from the top part (2).

16. Brewing device (1) as claimed in one of claims 14 or 15,
**characterised in that** the resilient clamping ring (43) has an inwardly lying catch orifice (44) and at least one catch lug (46) which extends into the catch orifice (44).

17. Brewing device (1) for preparing coffee, in particular for a low-pressure coffee machine, with a brewing chamber (18) comprising a top part (2) and a bottom part (3), and at least one filter pad (coffee pad) disposed in a recess of the bottom part (3) and filled with ground coffee, and the top part (2) and the bottom part (3) are designed so that they can be moved relative to one another and can be transferred from an open position in which the coffee pad can be inserted or removed into a brewing position, and a centrally symmetrically acting elastic element (17) projects into the brewing chamber (18) from the top part (2) of the brewing chamber (18),
**characterised in that** the elastic element (17) has at least two symmetrically disposed resilient arms (42), preferably several resilient arms (42), with a centrally symmetrically acting spring force, and the spring force is enough to release the wet coffee pad from the top part (2) at the end of a brewing process.

## Revendications

1. Dispositif d'infusion (1) pour préparer du café, en particulier pour une machine à café basse pression, comportant une chambre d'infusion (18) qui comprend une partie supérieure (2) et une partie inférieure (3), la partie inférieure (3) présentant un creux pour recevoir au moins un sachet-filtre (dosette de café souple) rempli de café moulu, la partie supérieure (2) et la partie inférieure (3) étant conçues pour être mobiles l'une par rapport à l'autre et étant aptes à passer d'une position ouverte dans laquelle la dosette de café peut être mise et enlevée, à une position d'infusion, et un élément élastique (17) à action symétrique par rapport au centre dépassant dans la chambre d'infusion (18) à partir de la partie supérieure (2) de ladite chambre (18), **caractérisé en ce que** l'élément élastique (17) présente au moins deux bras élastiques (42), de préférence plusieurs bras élastiques (42), disposés symétriquement qui ont une force élastique à action symétrique par rapport au centre, la force élastique étant suffisante pour détacher de la partie supérieure (2) la dosette de café humide après la fin d'une opération d'infusion.

2. Dispositif d'infusion (1) selon la revendication 1, **caractérisé en ce que** la force élastique de l'élément élastique (17) est plus faible que la pression d'application de la partie supérieure (2) sur la partie inférieure (3) dans la position d'infusion.

3. Dispositif d'infusion (1) selon la revendication 1 ou 2, **caractérisé par** une course élastique qui est calculée pour que la partie supérieure (2) serve de butée de compression pour l'élément élastique (17).

4. Dispositif d'infusion (1) selon l'une des revendications 1 à 3, **caractérisé en ce qu'**il est prévu une amenée (45) pour l'eau d'infusion dans la chambre d'infusion (18), et l'élément élastique (17) est conçu comme un élément diffuseur et est disposé dans l'amenée (45) de l'eau d'infusion.

5. Dispositif d'infusion (1) selon la revendication 4, **caractérisé en ce qu'**une proportion située entre 50 % et 100 %, de préférence supérieure à 90 % de l'eau d'infusion arrive sur l'élément élastique (17) conçu comme un élément diffuseur.

6. Dispositif d'infusion (1) selon la revendication 4 ou 5, **caractérisé en ce que** l'élément élastique (17) conçu comme un élément diffuseur répartit au moins au début de l'opération d'infusion l'eau d'infusion sur une grande surface sur la dosette de café.

7. Dispositif d'infusion (1) selon l'une des revendications 1 à 6, **caractérisé en ce que** le côté supérieur des bras élastiques (42) est conçu au moins par zones comme un élément diffuseur pour l'eau d'infusion.

8. Dispositif d'infusion (1) selon l'une des revendications 1 à 7, **caractérisé en ce que** les bras élastiques (42) s'étendent radialement vers l'extérieur à partir d'un axe vertical (A) de la chambre d'infusion (18).

9. Dispositif d'infusion (1) selon l'une des revendications 1 à 8, **caractérisé en ce que** les bras élastiques (42) ont une forme courbe en S et s'appuient avec leur première courbe contre la partie supérieure (2) de la chambre d'infusion (18), et appuient avec leur seconde courbe, dans la position d'infusion fermée, sur la dosette de café.

10. Dispositif d'infusion (1) selon la revendication 9, **caractérisé en ce que** la seconde courbe du S présente un plus grand rayon de courbure que la première.

11. Dispositif d'infusion (1) selon l'une des revendications 1 à 10, **caractérisé en ce que** les bras élastiques (42) présentent, au moins sur le côté dirigé vers la dosette de café, des bords arrondis.

12. Dispositif d'infusion (1) selon l'une des revendications 1 à 11, **caractérisé en ce que** les bras élastiques (42) sont réalisés en acier spécial.

13. Dispositif d'infusion (1) selon l'une des revendications 1 à 12, **caractérisé en ce que** la largeur des bras élastiques (42) représente entre 4 % et 16 %, de préférence entre 6 % et 10 % du diamètre de la chambre d'infusion.

14. Dispositif d'infusion (1) selon l'une des revendications 1 à 13, **caractérisé en ce que** les bras élastiques (42) s'étendent radialement vers l'extérieur à partir d'une bague de serrage élastique (43), et ladite bague de serrage élastique (43) est disposée sur la partie supérieure (2) de la chambre d'infusion (18) coaxialement par rapport à l'axe vertical.

15. Dispositif d'infusion (1) selon la revendication 14, **caractérisé en ce que** la bague de serrage élastique (43) est fixée sur un tourillon (30) qui dépasse dans la chambre d'infusion (18) à partir de la partie supérieure (2).

16. Dispositif d'infusion (1) selon la revendication 14 ou 15, **caractérisé en ce que** la bague de serrage élastique (43) présente une ouverture d'enclenchement intérieure (44) et au moins une languette d'enclenchement (46) qui s'étend dans ladite ouverture (44).

17. Dispositif d'infusion (1) pour préparer du café, en particulier pour une machine à café basse pression, comportant une chambre d'infusion (18) qui comprend une partie supérieure (2) et une partie inférieure (3), et au moins un sachet-filtre (dosette de café souple) disposé dans un creux de la partie inférieure (3) et rempli de café moulu, la partie supérieure (2) et la partie inférieure (3) étant conçues pour être mobiles l'une par rapport à l'autre et étant aptes à passer d'une position ouverte dans laquelle la dosette de café peut être mise et enlevée, à une position d'infusion, et un élément élastique (17) à action symétrique par rapport au centre dépassant dans la chambre d'infusion (18) à partir de la partie supérieure (2) de ladite chambre (18), **caractérisé en ce que** l'élément élastique (17) présente au moins deux bras élastiques (42), de préférence plusieurs bras élastiques (42), disposés symétriquement qui ont une force élastique à action symétrique par rapport au centre, la force élastique étant suffisante pour détacher de la partie supérieure (2) la dosette de café humide après la fin d'une opération d'infusion.
